# FASCICULE DE BREVET EUROPEEN

(11) **EP 2 216 244 B1**
(45) Date de publication et mention de la délivrance du brevet: **01.02.2012**
(21) Numéro de dépôt: 10152395.9
(22) Date de dépôt: 02.02.2010
(51) Int. Cl.: B64C 13/50, G05D 1/00

(54) **Système de commande de vol et aéronef le comportant**
Flugsteuerung für ein Luftfahrzeug und Luftfahrzeug mit einer solchen
Flight control system and aircraft comprising the same

(30) Priorité: 10.02.2009 FR 0950830
(43) Date de publication de la demande: 11.08.2010
(73) Titulaire: Airbus Operations, 31060 Toulouse (FR); Le Centre National de la Recherche Scientifique (CNRS), 75794 Paris Cedex 16 (FR)
(72) Inventeur: Sghairi, Manel, 31200, Toulouse (FR); Brot, Patrice, 31520, Ramonville Saint Agne (FR); Aubert, Jean-Jacques, 31820, Pibrac (FR); De Bonneval, Agnan, 31670, Labege (FR); Crouzet, Yves, 31520, Ramonville Saint Agne (FR)
(74) Mandataire: Bonnans, Arnaud

(56) Documents cités:
- DE-A1- 3 906 846
- US-A1- 2003 195 673
- US-A1- 2005 085 957
- US-A1- 2006 100 750

## Description

La présente invention concerne les systèmes de commande de vol (Flight Control Systems) présents dans les aéronefs.

Ces systèmes de commande de vol sont à l'interface entre les organes de pilotage (manche, palonnier, etc.) et les diverses surfaces de vol mobiles de l'aéronef (tels que les gouvernes de direction, de profondeur, les ailerons, les stabilisateurs, etc.).

Les avions de ligne modernes possèdent des systèmes de commande de vol de type « *fly by wire »* dans lesquels les actions mécaniques sur les organes de pilotage sont converties en des signaux transmis à des actionneurs commandant le déplacement des surfaces de vol, ces ordres étant transmis aux actionneurs par des calculateurs évolués.

Ces ordres sont calculés selon plusieurs types de lois. L'une de ces lois, appelée loi normale, est une loi de pilotage assistée qui retraite les consignes de pilotage fournies par les organes de pilotage pour optimiser les conditions de pilotage (confort des passagers, stabilisation de l'avion, protection du domaine de vol, etc.). Une autre loi, dite loi directe, est une loi qui ne fait que retranscrire les instructions de déplacement de l'avion transmises par les commandes de vol électriques sans retraitement de ces signaux visant à améliorer les performances de pilotage.

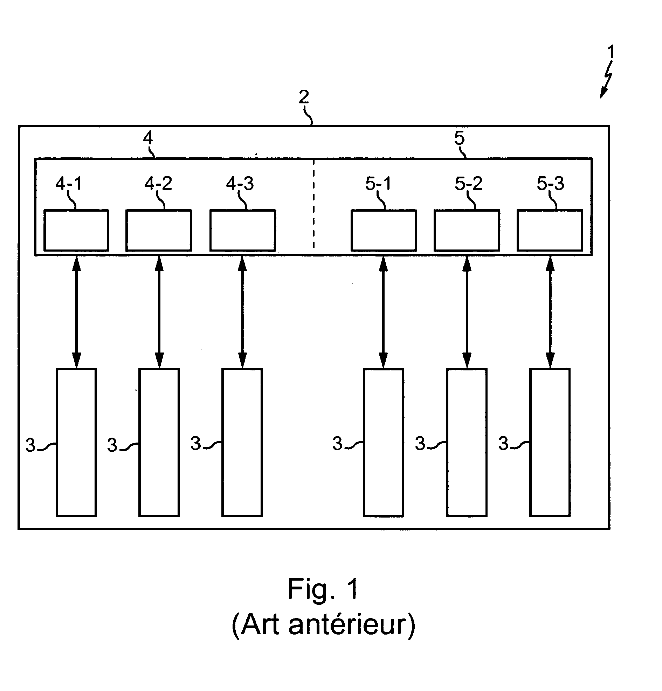

On connaît déjà, comme illustré sur la figure 1, un système de commande de vol 1 comportant un module de commande 2 présentant deux ensembles de calculateurs 4 et 5 afin de déterminer les ordres de commande à transmettre à des actionneurs 3. Le document US 20060100760, qui décit toutes les caractéristiques du préambule de la revendication 1, montre un tel système.

L'ensemble 4 comporte deux calculateurs 4-1 et 4-2 en mesure de calculer la commande des actionneurs 3 établie selon les lois de commande normale et directe (ces calculateurs sont appelés calculateurs primaires) et un calculateur 4-3 uniquement en mesure de calculer cette commande établie selon la loi directe (ce calculateur est appelé calculateur secondaire).

L'ensemble 5 comporte un calculateur primaire 5-1 et deux calculateurs secondaires 5-2 et 5-3.

Tous ces calculateurs sont installés en baie avionique et communiquent avec les actionneurs via des liaisons directes point à point analogiques.

Les actionneurs sont reliés à un ou deux calculateurs, avec dans le cas de deux calculateurs une architecture « maître/attente », le calculateur maître s'assure de la validité du signal de commande transmis à l'actionneur ce qui assure l'intégrité du dispositif. Lorsque le calculateur maître tombe en panne, le calculateur « en attente » prend le relais ce qui assure qu'un calculateur est toujours disponible.

Pour s'assurer de la validité de son ordre, chaque calculateur présente une structure à double unité de calculs (il s'agit de calculateurs double-voie encore appelés calculateurs « duplex »), non illustrée sur la figure 1.

La première unité est une unité de commande (COM) qui met en oeuvre les traitements nécessaires à la réalisation des fonctions du calculateur, à savoir déterminer un signal de commande vers un actionneur.

La seconde unité est une unité de surveillance ou de monitorage (MON) qui effectue de son côté les mêmes types d'opérations, les valeurs obtenues par chaque unité étant ensuite comparées et, s'il y a un écart qui dépasse le seuil de tolérance autorisé, le calculateur est automatiquement désactivé. Il devient alors inopérant et est déclaré en panne pour qu'un autre calculateur puisse s'y substituer pour mettre en oeuvre les fonctions délaissées par ce calculateur en panne.

Chaque calculateur est ainsi prévu pour détecter ses propres pannes et inhiber les sorties correspondantes tout en signalant son état.

Le matériel des calculateurs primaires et secondaires est différent de façon à minimiser les risques de défaillance simultanée de l'ensemble des calculateurs (dissimilarité matérielle).

De plus, le matériel des deux voies (COM et MON) de chaque calculateur est identique mais pour des raisons de sécurité, les logiciels de ces deux voies sont différents de façon à assurer une dissimilarité logicielle.

L'invention vise à fournir un système de commande de vol qui présente une architecture modifiée par rapport à celle de l'art antérieure décrite ci-dessus, à la fois moins coûteuse en ressources matérielles et logicielles tout en répondant aux mêmes exigences de sécurité et de disponibilité que le système de l'art antérieur.

Elle propose à cet effet un système de commande de vol pour aéronef comportant :
- au moins un actionneur d'une surface de vol mobile dudit aéronef ;
- un module de commande de vol en communication avec ledit actionneur, ledit module comportant un premier et un deuxième calculateur, chaque calculateur étant adapté à calculer un ordre de commande établi selon au moins une loi de commande prédéterminée de ladite surface de vol ; caractérisé en ce que ledit premier calculateur, dit calculateur valideur, comporte des moyens logiques adaptés à comparer son ordre de commande avec celui dudit deuxième calculateur, dit calculateur maître, et à transmettre le résultat de ladite comparaison audit actionneur, ledit actionneur comportant des moyens logiques adaptés à décider, à partir de ce résultat, d'exécuter ou non l'ordre du calculateur maître.

Contrairement à l'architecture COM/MON de l'art antérieur, ici le calculateur valideur ne décide pas de lui-même si l'ordre du maître doit être transmis à l'actionneur, l'ordre du maître est systématiquement transmis à l'actionneur et c'est l'actionneur lui-même qui grâce aux moyens logiques qu'il comporte décide, en fonction du résultat renvoyé par le ou les calculateurs valideurs du calculateur maître, d'exécuter ou non l'ordre du calculateur maître.

Une étape de décision étant déportée au niveau de l'actionneur, cela permet de réaliser des calculateurs plus simples et moins coûteux tout en offrant une plus grande flexibilité pour l'agencement du système.

Il est ainsi en particulier possible d'associer un calculateur maître à plusieurs calculateurs valideur ou bien encore d'associer un actionneur à plusieurs couples maître/valideur de calculateurs pour s'assurer avec une sécurité renforcée de la fiabilité de l'ordre transmis.

Cette flexibilité permet notamment d'utiliser des calculateurs à voie unique (calculateurs dits « simplex », c'est-à-dire dépourvus de microprocesseurs redondants) tout en conservant le même niveau de sécurité.

Selon des caractéristiques optionnelles, ledit calculateur maître comporte également lesdits moyens logiques de comparaison.

Ceci permet de rendre chaque calculateur polyvalent les rôles entre maître et valideur pouvant être échangés à tout moment en fonction des défaillances des calculateurs, ce qui contribue à rendre le système plus flexible et à réduire le nombre total de calculateurs nécessaires.

Selon d'autres caractéristiques optionnelles, ledit actionneur est en communication avec un groupe de calculateurs maître, chaque calculateur maître étant associé à au moins un calculateur valideur d'un groupe de calculateurs valideur, lesdits moyens logiques dudit actionneur étant adaptés à sélectionner parmi les ordres provenant desdits calculateurs maître celui à exécuter.

L'actionneur est associé à plusieurs calculateurs maître pour maximiser les chances qu'un ordre provenant d'un maître soit considéré comme valide et puisse donc être fiable.

Selon d'autres caractéristiques optionnelles, lesdits moyens logiques dudit actionneur présentent une architecture à priorité.

Les calculateurs maître reliés à l'actionneur sont ainsi hiérarchisés par niveau de priorité de sorte que c'est le premier ordre valide selon cette logique de priorité qui est exécuté.

Selon encore d'autres caractéristiques optionnelles, chaque calculateur valideur est adapté à calculer l'ordre de commande selon un programme différent de celui du calculateur maître auquel il est associé.

Pour une même loi de commande, la dissimilarité logicielle pour le calcul d'un ordre entre calculateurs maître et valideur offre une sécurité supplémentaire.

Selon encore d'autres caractéristiques optionnelles, chaque calculateur est adapté à détecter lorsque le calculateur auquel il est associé calcule l'ordre de commande selon un même programme et si tel est le cas à se reconfigurer pour calculer cet ordre de commande selon un programme différent.

La reconfiguration logicielle permet ainsi de maximiser l'utilisation de chaque calculateur ce qui contribue à minimiser le nombre total de calculateurs tout en conservant, pour une même loi de commande une dissimilarité logicielle entre calculateurs maître et valideur.

Selon encore d'autres caractéristiques optionnelles :
- ledit actionneur comporte une unité de commande et une unité de surveillance de ladite unité de commande ;
- chaque unité est reliée à au moins un calculateur maître et au calculateur valideur associé ; et/ou
- l'une des unités est uniquement reliée à un calculateur maître et l'autre unité est uniquement reliée au calculateur valideur associé, lesdites unités de commande et de surveillance étant également reliées entre elles.

La mise en relation des unités de commande et de surveillance des actionneurs avec les calculateurs peut ainsi s'opérer directement ou indirectement (par l'intermédiaire de l'autre unité).

L'invention vise également sous un deuxième aspect un aéronef équipé d'un système tel qu'exposé ci-dessus.

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une représentation schématique d'un système de commande de vol selon l'art antérieur décrit précédemment ;
- la figure 2 est une vue schématique d'un système de commande de vol selon l'invention. ;
- la figure 3 est une vue détaillant le réseau de communication permettant le transfert d'information des ensembles de calculateurs que comportent le système selon l'invention vers les actionneurs de ce système ; et
- la figure 4 est une vue similaire à la figure 3 mais pour une variante du réseau de communication.

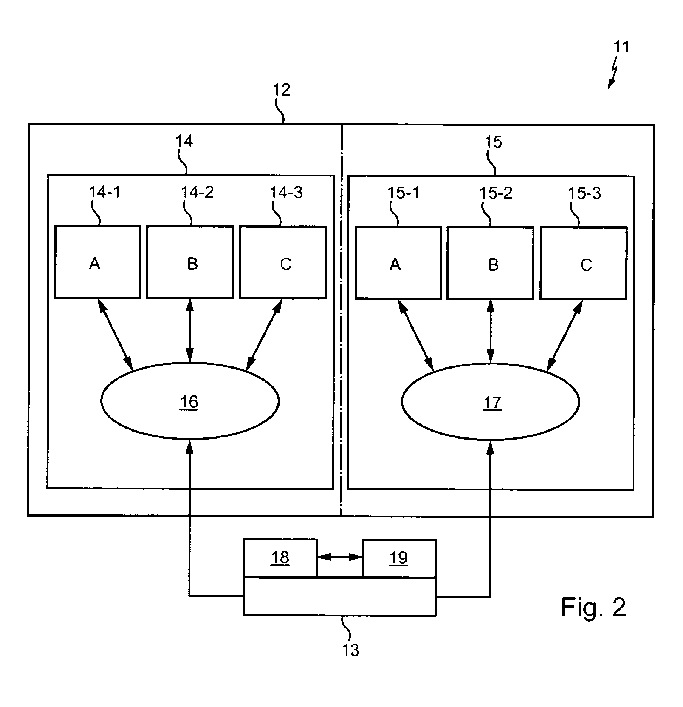

Le système de commande de vol selon l'invention 11 illustré sur la figure 2 présente un module de commande 12 pour transmettre des ordres à une pluralité d'actionneurs 13.

Le module de commande 12 comporte six calculateurs « simplex » (ils ne présentent qu'une seule voie et un seul processeur de calcul) répartis en deux ensembles 14 et 15 de trois calculateurs, chaque ensemble étant relié à chaque actionneur 13.

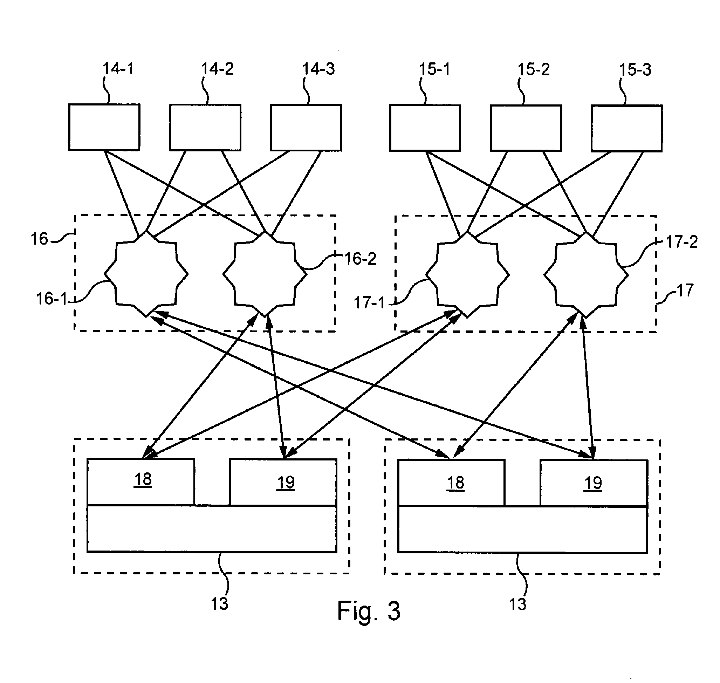

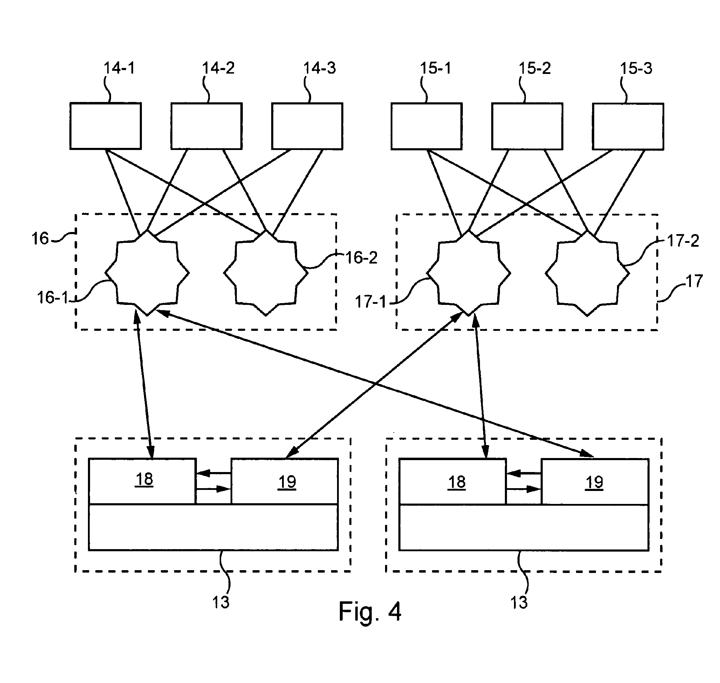

L'ensemble de calculateurs 14 (respectivement 15) communique avec les actionneurs 13 par un organe numérique d'échange de données 16 (respectivement 17) dont on exposera ci-après la structure en détail à l'aide des figures 3 et 4.

L'ensemble de calculateurs 14 (respectivement 15) comporte deux calculateurs primaires 14-1 et 14-2 (respectivement 15-1 et 15-2) permettant de calculer les ordres de commande selon la loi normale et selon la loi directe ainsi qu'un calculateur secondaire 14-3 (respectivement 15-3) pour calculer les ordres de commande à partir de la loi directe uniquement.

Les calculateurs primaires et secondaires sont de conception matérielle différente afin de répondre aux exigences de sécurité (dissimilarité matérielle).

Les calculateurs primaires de 14-1 et 14-2 (respectivement 15-1 et 15-2) fonctionnent avec deux variantes de programmes A et B pour le calcul selon les lois normale et directe qui sont différentes l'une de l'autre tandis que le calculateur 14-3 (respectivement 15-3) fonctionne pour le calcul selon la loi directe avec une variante de programme C différente des variantes A et B.

Ainsi le calcul selon la loi normale est obtenu par deux programmes différents (A et B) tandis que le calcul selon la loi directe est également obtenu par deux programmes différents (B et C ou A et C ou A et B). La dissimilarité logicielle est donc bien assurée pour la détermination des signaux de commande ce qui assure un haut niveau de sécurité.

Comme on le verra ci-après, chaque calculateur est reconfigurable à chaud en fonction des défaillances.

Ces ensembles de calculateurs sont localisés en baie avionique (la baie avionique est l'espace dans lequel sont regroupés la majeure partie des équipements électroniques d'un avion, en général situé sous l'espace utile de l'avion) et sont alimentés par deux systèmes électriques séparés.

Chaque actionneur 13 comporte deux voies 18 et 19 (voie COM et voie MON) connectées aux deux ensembles de calculateurs 14 et 15 de sorte que chaque actionneur communique par ses voies 18 et 19 avec tous les calculateurs.

La voie 18 (unité de commande COM) réalise les fonctions de sélection de l'ordre à exécuter et la voie 19 (unité de surveillance MON) de son côté effectue les mêmes types d'opérations pour que à la sortie les valeurs obtenues par chaque unité soient comparées et, en cas de désaccord, l'actionneur soit désactivé.

Dans l'architecture du système de commande selon l'invention, appelée architecture à priorité, tous les calculateurs génèrent les ordres de commande des surfaces de vol mobiles avec chaque calculateur qui joue le rôle de maître pour un groupe d'actionneurs et le rôle de valideur pour les autres actionneurs.

Chaque calculateur maître est associé à un ou plusieurs calculateurs valideur et chaque actionneur est associé à un ou plusieurs maîtres.

Dans le cas où l'actionneur a plusieurs maître ceux-ci sont classés selon une logique de priorité exposée ci-après pour définir le maître à chaque instant.

Chaque calculateur transmet les ordres de surface de vol vers les actionneurs dont il est maître et vers tous les autres calculateurs. Chaque calculateur « valideur » compare son ordre avec l'ordre du calculateur maître pour les actionneurs dont il n'est pas maître lui-même et, si le résultat de la comparaison est positif (ordre du maître validé), le calculateur valideur transmet cette information aux actionneurs concernés. Chaque actionneur reçoit donc un ou plusieurs ordres ainsi que les validités correspondantes provenant des calculateurs valideur (dans l'exemple illustré les calculateurs 14-2, 14-3 et 15-1 à 15-3). Le contrôle effectué par l'actionneur est alors réalisé en trois étapes.

Selon la première étape, l'unité 18 (respectivement l'unité 19) reçoit les ordres de tous les calculateurs maître contrôlant l'actionneur considéré (dans l'exemple illustré les calculateurs 14-1 à 14-3 et 15-1 et 15-2 sont des calculateurs maître pour l'actionneur). L'unité 18 (respectivement 19) choisit l'ordre à appliquer en fonction d'une logique de priorité dont un exemple est synthétisé par le tableau représenté ci-dessous :

| **Priorités** | **Calculateur Maître** | **Calculateur Valideur** | **Niveaux de lois** |
|---|---|---|---|
| 7 | Calculateur 14-1 | Calculateur 14-2 ou Calculateur 15-2 | Loi Normale |
| 6 | Calculateur 15-1 | Calculateur 14-2 ou Calculateur 15-2 | Loi Normale |
| 5 | Calculateur 14-1 | Calculateur 15-1, après reconfiguration de ce calculateur avec le logiciel B | Loi Normale |
| 4 | Calculateur 14-2 | Calculateur 15-2, après reconfiguration de ce calculateur avec le logiciel A | Loi Normale |
| 3 | Calculateur 14-2 | Calculateur 14-3 ou Calculateur 15-3 | Loi Directe |
| 2 | Calculateur 15-2 | Calculateur 14-3 ou Calculateur 15-3 | Loi Directe |
| 1 | Calculateur 14-3 | Calculateur 15-3 | Loi Directe |

Cette logique de priorité tient compte de la dégradation des lois, la loi normale étant à privilégier par rapport à la dégradée (loi directe), le niveau 7 correspondant au niveau de priorité le plus élevé.

A chaque niveau de priorité la dissimilarité logicielle est conservée entre le calculateur maître et son calculateur valideur associé.

Selon une deuxième étape, l'unité 18 (respectivement 19), doit valider cet ordre à partir des informations des calculateurs valideurs correspondants. Si l'ordre du maître sélectionné n'est pas correctement validé par les calculateurs valideurs, cet ordre est ignoré, et un nouveau calculateur maître est choisi en fonction de la logique de priorité ci-dessus.

Enfin, et selon une troisième étape, les deux unités 18 et 19 transmettent à tous les calculateurs l'ordre appliqué, la position actuelle de l'actionneur et les adresses du maître et des valideurs actuels ainsi que le cas échéant des maîtres considérés comme défaillant (maîtres rejetés).

A n'importe quelle étape, l'unité 19 (respectivement l'unité 18) a la possibilité de couper l'unité 18 (respectivement l'unité 19) si elle détecte un désaccord entre les deux.

Lorsque le calculateur 15-1 voit que les calculateurs 14-2 et 15-2 sont perdus (priorité 5), il se reconfigure en logiciel B afin d'assurer la dissimilarité logicielle pour la loi normale entre lui et le calculateur 14-1.

De même, lorsque le calculateur 15-2 voit que les calculateurs 14-1 et 15-1 sont perdus (priorité 4), il se reconfigure selon le logiciel A afin d'assurer la dissimilarité logicielle pour la loi normale entre lui et le calculateur 14-2.

On va maintenant décrire un exemple de réseau de communication entre les calculateurs du module 12 et les actionneurs 13 à l'aide de la figure 3.

Ce réseau comporte deux organes d'échange de données 16 et 17.

L'organe 16 (respectivement 17) comporte deux éléments 16-1 et 16-2 (respectivement 17-1 et 17-2), chaque élément comportant un bus AFDX (Avionics Full Duplex switched ethernet) à 100 Mbit/s, situé en baie avionique ou ailleurs dans le fuselage de l'avion et relié à un micro-bus (d'un débit de 10 Mbit/s) situé proche des actionneurs (ces bus ne sont pas illustrés sur la figure). Ces bus ont été développés et standardisés pour répondre aux normes du domaine aéronautique.

Les réseaux AFDX sont basés sur le principe des réseaux commutés, c'est-à-dire que les actionneurs et les calculateurs chargés de l'émission ou de la réception de données s'organisent autour de commutateurs par lesquels transitent ces données.

Ces réseaux réalisent une liaison numérique entre les calculateurs et les actionneurs, le multiplexage des données ainsi obtenu permettant de faire communiquer aisément chaque calculateur avec chaque actionneur (ce qui n'était pas le cas avec le dispositif de l'art antérieur où les liaisons entre les calculateurs et les actionneurs étaient des liaisons point à point analogiques).

Chaque organe 16 et 17 est relié à chaque unité 18 et 19 de chaque actionneur 13, de façon à ce que soit reliée directement par les bus AFDX et les micro-bus chaque unité 18 et 19 avec chaque calculateur.

Dans une variante illustrée en figure 4, l'unité 18 de chaque actionneur est uniquement reliée à l'un des ensembles de calculateurs tandis que l'unité 19 est reliée à l'autre des ensembles de calculateurs, avec les unités 18 et 19 qui sont reliées entre elles de sorte que l'unité 18 peut communiquer avec l'ensemble de calculateurs auquel elle n'est pas reliée directement par l'intermédiaire de l'unité 19 et réciproquement.

En variante, les unités 18 et 19 de chaque actionneur peuvent partager un même média pour communiquer avec le calculateur, en utilisant des CRC (Cyclic Redundancy Check) dits applicatifs, pour signer leurs messages.

Il est également possible d'utiliser d'autres types de bus tels que des bus ARINC (Aeronautical Radio Incorporated) ou tout autre type d'organe de communication permettant un multiplexage numérique, entre les calculateurs et les actionneurs pourvu que ceux-ci soient compatibles avec les normes dans le domaine aéronautique.

Dans une autre variante encore ce ne sont pas les lois normales et directes qui sont implémentées dans les calculateurs mais tout autre type de loi telle que par exemple une loi qui ne serait, contrairement à la loi directe, que partiellement dégradée par rapport à la loi normale (suite à la perte des signaux de capteurs de l'avion par exemple).

On rappellera enfin que le nombre de calculateurs est variable selon les besoins et n'est pas restreint au nombre décrit dans les exemples illustrés en figures 2 à 4.

De nombreuses autres variantes sont possibles en fonction des circonstances, et l'on rappelle à cet égard que l'invention ne se limite pas aux exemples décrits et représentés.

## Revendications

1. Système de commande de vol pour aéronef, comportant :
- au moins un actionneur (13) d'une surface de vol mobile dudit aéronef ;
- un module de commande de vol (12) en communication avec ledit actionneur (13), ledit module comportant un premier et un deuxième calculateur (14-1, 14-2, 14-3, 15-1, 15-2, 15-3), chaque calculateur étant adapté à calculer un ordre de commande établi selon au moins une loi de commande prédéterminée de ladite surface de vol ; ledit premier calculateur (14-1, 14-2, 14-3, 15-1, 15-2, 15-3), dit calculateur valideur, comportant des moyens logiques adaptés à comparer son ordre de commande avec celui dudit deuxième calculateur (14-1, 14-2, 14-3, 15-1, 15-2, 15-3), dit calculateur maître, et **caracterisé en ce que** ledites moyens logiqes sont adoptés à transmettre le résultat de ladite comparaison audit actionneur (13), ledit actionneur (13) comportant des moyens logiques (18, 19) adaptés à décider, à partir de ce résultat, d'exécuter ou non l'ordre du calculateur maître.

2. Système selon la revendication 1, **caractérisé en ce que** ledit calculateur maître comporte également lesdits moyens logiques de comparaison.

3. Système selon l'une quelconque des revendications 1 ou 2, **caractérisé en ce que** ledit actionneur (13) est en communication avec un groupe de calculateurs maître (14-1, 14-2, 14-3, 15-1, 15-2, 15-3), chaque calculateur maître étant associé à au moins un calculateur valideur d'un groupe de calculateurs valideur (14-1, 14-2, 14-3, 15-1, 15-2, 15-3), lesdits moyens logiques (18, 19) dudit actionneur (13) étant adaptés à sélectionner parmi les ordres provenant desdits calculateurs maître celui à exécuter.

4. Système selon la revendication 3, **caractérisé en ce que** lesdits moyens logiques (18,19) dudit actionneur (13) présentent une architecture à priorité.

5. Système selon l'une quelconque des revendications 1 à 4 **caractérisé en ce que** chaque calculateur valideur est adapté à calculer l'ordre de commande selon un programme différent de celui du calculateur maître auquel il est associé.

6. Système selon l'une quelconque des revendications 1 à 5, **caractérisé en ce que** chaque calculateur (14-1, 14-2, 14-3, 15-1, 15-2, 15-3) est adapté à détecter lorsque le calculateur auquel il est associé calcule l'ordre de commande selon un même programme et si tel est le cas à se reconfigurer pour calculer cet ordre de commande selon un programme différent.

7. Système selon l'une quelconque des revendications 1 à 6, **caractérisé en ce que** ledit actionneur (13) comporte une unité de commande (18) et une unité de surveillance (19) de ladite unité de commande (18).

8. Système selon la revendication 7, **caractérisé en ce que** chaque unité (18, 19) est reliée à au moins un calculateur maître et au calculateur valideur associé.

9. Système selon la revendication 7, **caractérisé en ce que** l'une des unités (18, 19) est uniquement reliée à un calculateur maître et l'autre unité est uniquement reliée au calculateur valideur associé, lesdites unités de commande (18) et de surveillance (19) étant également reliées entre elles.

10. Aéronef équipé d'un système selon l'une quelconque des revendications 1 à 9.

## Claims

1. Flight control system for an aircraft, comprising:
- at least one actuator (13) for a movable flight surface of the said aircraft;
- a flight control module (12) in communication with the said actuator (13), the said module comprising a first and a second computer (14-1, 14-2, 14-3, 15-1, 15-2, 15-3), each computer being adapted for calculating a control command established according to at least one predetermined law for control of the said flight surface; the said first computer (14-1, 14-2, 14-3, 15-1, 15-2, 15-3), known as validating computer, comprising logic means adapted for comparing its control command with that of the said second computer (14-1, 14-2, 14-3, 15-1, 15-2, 15-3), known as master computer, and **characterized in that** said logic means are adapted for transmitting the result of the said comparison to the said actuator (13), the said actuator (13) comprising logic means (18, 19) adapted for deciding, on the basis of that result, to execute or not to execute the command of the master computer.

2. System according to claim 1, **characterized in that** the said master computer also comprises the said comparison logic means.

3. System according to any one of claims 1 or 2, **characterized in that** the said actuator (13) is in communication with a group of master computers (14-1, 14-2, 14-3, 15-1, 15-2, 15-3), each master computer being associated with at least one validating computer of a group of validating computers (14-1, 14-2, 14-3, 15-1, 15-2, 15-3), the said logic means (18, 19) of the said actuator (13) being adapted for selecting the one to be executed from among the commands issued from the said master computers.

4. System according to claim 3, **characterized in that** the said logic means (18, 19) of the said actuator (13) have a priority architecture.

5. System according to any one of claims 1 to 4, **characterized in that** each validating computer is adapted for calculating the control command according to a program different from the one of the master computer with which it is associated.

6. System according to any one of claims 1 to 5, **characterized in that** each computer (14-1, 14-2, 14-3, 15-1, 15-2, 15-3) is adapted for detecting when the computer with which it is associated is calculating the control command according to the same program and if such is the case, for being reconfigured in order to calculate that control command according to a different program.

7. System according to any one of claims 1 to 6, **characterized in that** the said actuator (13) comprises a control unit (18) and a monitoring unit (19) for the said control unit (18).

8. System according to claim 7, **characterized in that** each unit (18, 19) is connected to at least one master computer and to the associated validating computer.

9. System according to claim 7, **characterized in that** one of the units (18, 19) is only connected to a master computer and the other unit is only connected to the associated validating computer, the said control (18) and monitoring (19) units also being connected to one another.

10. Aircraft equipped with a system according to any one of claims 1 to 9.

## Patentansprüche

1. Flugsteuerungssystem für Luftfahrzeuge, enthaltend:
- zumindest einen Aktuator (13) für eine bewegliche Flugsteuerungsfläche des Luftfahrzeugs;
- ein Flugsteuerungsmodul (12), das mit dem Aktuator (13) kommuniziert, wobei das Modul einen ersten und einen zweiten Rechner (14-1, 14-2, 14-3, 15-1, 15-2, 15-3) aufweist, wobei jeder Rechner dazu geeignet ist, einen gemäß zumindest einem vorbestimmten Steuerungsgesetz der Flugsteuerungsfläche erstellten Steuerbefehl zu errechnen; wobei der erste Rechner (14-1, 14-2, 14-3, 15-1, 15-2, 15-3), der sogenannte Validierungsrechner, logische Mittel aufweist, die dazu geeignet sind, seinen Steuerbefehl mit dem des zweiten Rechners (14-1, 14-2, 14-3, 15-1, 15-2, 15-3), des sogenannten Leitrechners, zu vergleichen, und
**dadurch gekennzeichnet, dass** die logischen Mittel dazu geeignet sind, dem Aktuator (13) das Ergebnis des Vergleichs zu übertragen, wobei der Aktuator (13) logische Mittel (18, 19) aufweist, die dazu geeignet sind, ausgehend von diesem Ergebnis zu entscheiden, ob dieser Befehl des Leitrechners ausgeführt wird oder nicht.

2. System nach Anspruch 1,
**dadurch gekennzeichnet, dass** der Leitrechner auch die logischen Vergleichsmittel aufweist.

3. System nach einem der Ansprüche 1 oder 2,
**dadurch gekennzeichnet, dass** der Aktuator (13) mit einer Gruppe von Leitrechnern (14-1, 14-2, 14-3, 15-1, 15-2, 15-3) kommuniziert, wobei jedem Leitrechner zumindest ein Validierungsrechner aus einer Gruppe von Validierungsrechnern (14-1, 14-2, 14-3, 15-1, 15-2, 15-3) zugeordnet ist, wobei die logischen Mittel (18, 19) des Aktuators (13) dazu geeignet sind, aus den von den Leitrechnern stammenden Befehlen den auszuführenden Befehl auszuwählen.

4. System nach Anspruch 3,
**dadurch gekennzeichnet, dass** die logischen Mittel (18, 19) des Aktuators (13) eine Prioritätsarchitektur haben.

5. System nach einem der Ansprüche 1 bis 4,
**dadurch gekennzeichnet, dass** jeder Validierungsrechner dazu geeignet ist, den Steuerbefehl gemäß einem Programm zu errechnen, das sich von dem des Leitrechners, dem er zugeordnet ist, unterscheidet.

6. System nach einem der Ansprüche 1 bis 5,
**dadurch gekennzeichnet, dass** jeder Rechner (14-1, 14-2, 14-3, 15-1, 15-2, 15-3) dazu geeignet ist, zu erfassen, wenn der Rechner, der diesem zugeordnet ist, den Steuerbefehl gemäß einem gleichen Programm errechnet, und - falls dies zutrifft - sich zu rekonfigurieren, um diesen Steuerbefehl gemäß einem sich davon unterscheidenden Programm zu errechnen.

7. System nach einem der Ansprüche 1 bis 6,
**dadurch gekennzeichnet, dass** der Aktuator (13) eine Steuerungseinheit (18) und eine Überwachungseinheit (19) für die Steuerungseinheit (18) aufweist.

8. System nach Anspruch 7,
**dadurch gekennzeichnet, dass** jede Einheit (18, 19) mit zumindest einem Leitrechner und dem zugeordneten Validierungsrechner verbunden ist.

9. System nach Anspruch 7,
**dadurch gekennzeichnet, dass** eine der Einheiten (18, 19) nur mit einem Leitrechner verbunden ist und die andere Einheit nur mit dem zugeordneten Validierungsrechner verbunden ist, wobei die Steuerungseinheit (18) und die Überwachungseinheit (19) auch miteinander verbunden sind.

10. Luftfahrzeug, das mit einem System nach einem der Ansprüche 1 bis 9 ausgestattet ist.
